# EUROPEAN PATENT APPLICATION

(11) **EP 2 455 896 A1**
(43) Date of publication of application: **23.05.2012**
(21) Application number: 10191834.0
(22) Date of filing: 19.11.2010
(51) Int. Cl.: G06Q 10/00

(54) **Mobile communication device, server, and method of facilitating resource reservations**

(71) Applicant: Research In Motion Limited, Waterloo, ON N2L 3W8 (CA)
(72) Inventor: May, Darrell Reginald, Waterloo Ontario N2L 3X2 (CA); Bredin, Robert John Thomas, Waterloo Ontario N2L 3L3 (CA); Cocca, David Mathew, Cambridge Ontario N3C 3R5 (CA)
(74) Representative: Patel, Binesh

(57) **Abstract**

To facilitate resource reservation, a server can preemptively determine resource availability. Indeed, upon receiving an availability request for a desired attendee for a calendar event, the request specifying a date and time, the server can transmit a search request to a server maintaining an organization resource cache, which stores availability information for resources. Upon receiving, from the server, a search result, and based on the search result, the server can store, in a memory, an indication of a specific resource that is available at the date and time.

## Description

The present application relates generally to reserving resources for meetings and, more specifically, to facilitating such resource reservation.

Many computing devices, such as personal digital assistants, mobile telephones and wireless communication devices, include a calendar or date book application which permits the user to schedule and review appointments. The graphical user interface (GUI) of such applications typically resembles a date book. Scheduled events can be viewable in various layouts, such as a day, week, or month view. A user can employ the calendar application to schedule a new appointment, where such scheduling includes inviting desired attendees. While selecting desired attendees to invite, the user can view availability information for each of the desired attendees. Such availability information can allow the user to schedule the new appointment in a manner that optimizes attendance by the desired attendees.

### GENERAL

To facilitate resource reservation, a server can preemptively determine resource availability. Consequently, when selecting a resource for a meeting, for example, a meeting organizer can be presented with only those resources (e.g., meeting rooms) available for the specified meeting time.

According to an aspect of the present disclosure, there is provided a method of facilitating resource reservation. The method comprises receiving an availability request for a desired attendee for a calendar event, the request specifying a date and time, the availably request preceding a request to establish the calendar event, searching an organization resource cache using the date and time, the organization resource cache storing availability information for resources, receiving a search result from the organization resource cache and, based on the search result, storing, in a memory, an indication of a specific resource that is available on the date at the time. In other aspects of the present application, a server is provided for carrying out this method and a computer readable medium is provided for adapting a processor in a server to carry out this method.

According to another aspect of the present disclosure, there is provided a method of establishing a new appointment in a calendar. The method comprises transmitting an availability request for a desired attendee and a selected date and time, receiving an availability response providing availability information for the desired attendee and transmitting a resource request, the resource request specifying said selected date and time. The method further includes receiving a resource response, the resource response including an indication of at least one resource available for the selected date and time, presenting an indication of the at least one resource available for the selected date and time and receiving a selection of the at least one resource available for the selected date and time. In other aspects of the present application, a mobile communication device is provided for carrying out this method and a computer readable medium is provided for adapting a processor in a mobile communication device to carry out this method.

Other aspects and features of the present disclosure will become apparent to those of ordinary skill in the art upon review of the following description of specific implementations of the disclosure in conjunction with the accompanying figures.

### BRIEF DESCRIPTION OF THE DRAWINGS

Reference will now be made, by way of example, to the accompanying drawings which show example implementations; and in which:

FIG. 1 illustrates a set of meeting rooms;

FIG. 2 illustrates elements of an example network environment for electronic messaging, the elements including a mobile communication device and a network environment, which network environment includes a server;

FIG. 3 illustrates example components of the mobile communication device of FIG. 2;

FIG. 4 illustrates an example calendar event create screen for display on the mobile communication device of FIG. 2;

FIG. 5 illustrates example steps in a method, carried out at mobile communication device of FIG. 2, of obtaining availability information for a desired meeting attendee;

FIG. 6 illustrates example steps in a method, carried out at the server of FIG. 2, of obtaining and caching resource availability information;

FIG. 7 illustrates example steps in a method, carried out at mobile communication device of FIG. 2, of providing information related to resource availability; and

FIG. 8 illustrates example steps in a method, carried out at the server of FIG. 2, of providing cached information related to resource availability.

### DESCRIPTION OF PREFERRED EMBODIMENTS

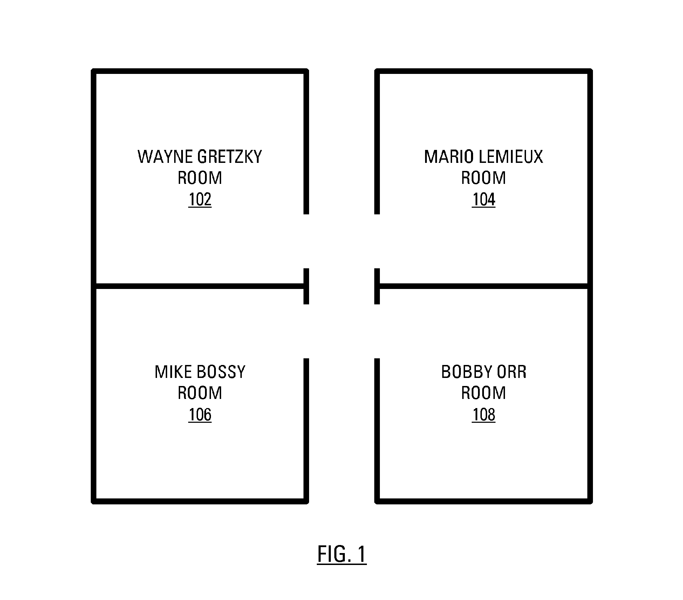

FIG. 1 illustrates an example set of meeting rooms. Each of the rooms is associated with a name and the rooms include: a Wayne Gretzky room 102; a Mario Lemieux room 104; a Mike Bossy room 106; and a Bobby Orr room 108.

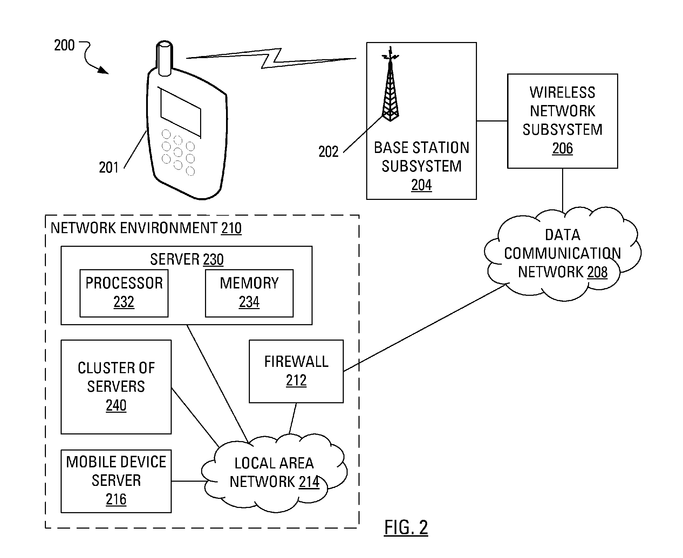

FIG. 2 illustrates elements of an example network environment 200 for a mobile communication device 201. The elements of the example network environment 200 include multiple wireless carrier networks and a data communication network 208, which can be considered to represent at least one wide area network, such as the present day Internet and successors, as well as, potentially, multiple local area networks. A base station antenna 202, with which the wireless communication device 201 can communicate wirelessly, is provided as part of a base station subsystem 204.

The base station subsystem 204 connects to a wireless network subsystem 206. In an example Global System for Mobile communications (GSM) implementation, the wireless network subsystem 206 includes, among other components, a Mobile Services Switching Center, a Home Location Register, a Visitor Location Register, a relay and a Short Messaging Service Center (SMSC). As illustrated in FIG. 2, the wireless network subsystem 206 is connected to the data communication network 208.

The communication device 201 can be associated with a network environment 210 connected to the data communication network 208. The network environment 210 can, for instance, include a firewall or proxy server 212 connecting to the data communication network 208 and to a local area network (LAN) 214. The LAN 214 can allow communication between a device server 216, a server 230 and between the servers 216, 218 and other network entities (not shown) through the data communication network 208. The server 230 includes components such as a server processor 232 and a server memory 234.

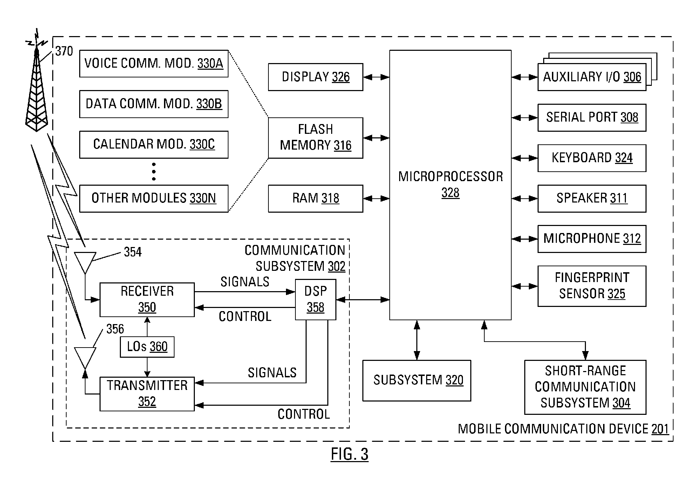

FIG. 3 illustrates the mobile communication device 201. The mobile communication device 201 includes a housing, an input device (e.g., a keyboard 324 having a plurality of keys) and an output device (e.g., a display 326), which can comprise a full graphic, or full color, Liquid Crystal Display (LCD). In some embodiments, the display 326 can comprise a touchscreen display. In such embodiments, the keyboard 324 can comprise a virtual keyboard. Other types of output devices can alternatively be utilized. A processing device (a microprocessor 328) is shown schematically in FIG. 3 as coupled between the keyboard 324 and the display 326. The microprocessor 328 controls the operation of the display 326, as well as the overall operation of the mobile communication device 201, in part, responsive to actuation of the keys on the keyboard 324 by a user.

The housing can be elongated vertically, or can take on other sizes and shapes (including clamshell housing structures). In the case in which the keyboard 324 includes keys that are associated with at least one alphabetic character and at least one numeric character, the keyboard 324 can include a mode selection key, or other hardware or software, for switching between alphabetic entry and numeric entry.

In addition to the microprocessor 328, other parts of the mobile communication device 201 are shown schematically in FIG. 3. These can include a communications subsystem 302, a short-range communications subsystem 304, the keyboard 324 and the display 326. The mobile communication device 201 can further include other input/output devices, such as a set of auxiliary I/O devices 306, a serial port 308, a speaker 311 and a microphone 312. The mobile communication device 201 can further include memory devices including a flash memory 316 and a Random Access Memory (RAM) 318 and various other device subsystems 320. The mobile communication device 201 can comprise a two-way radio frequency (RF) communication device having voice and data communication capabilities. In addition, the mobile communication device 201 can have the capability to communicate with other computer systems via the Internet.

Operating system software executed by the microprocessor 328 can be stored in a computer readable medium, such as the flash memory 316, but can be stored in other types of memory devices, such as a read only memory (ROM) or similar storage element. In addition, system software, specific device applications, or parts thereof, can be temporarily loaded into a volatile store, such as the RAM 318. Communication signals received by the mobile device can also be stored to the RAM 318.

The microprocessor 328, in addition to its operating system functions, enables execution of software applications on the mobile communication device 201. A predetermined set of software applications that control basic device operations, such as a voice communications module 330A and a data communications module 330B, can be installed on the mobile communication device 201 during manufacture. A calendar module 330C can also be installed on the mobile communication device 201 during manufacture, to implement aspects of the present disclosure. As well, additional software modules, illustrated as another software module 330N, which can be, for instance, a personal information manager (PIM) application, can be installed during manufacture. The PIM application can be capable of organizing and managing data items, such as e-mail messages, voice mail messages, appointments and task items. The PIM application can also be capable of sending and receiving data items via a wireless carrier network 370 represented by a radio tower. The data items managed by the PIM application can be seamlessly integrated, synchronized and updated via the wireless carrier network 370 with the device user's corresponding data items stored or associated with a host computer system.

Communication functions, including data and voice communications, are performed through the communication subsystem 302 and, possibly, through the short-range communications subsystem 304. The communication subsystem 302 includes a receiver 350, a transmitter 352 and one or more antennas, illustrated as a receive antenna 354 and a transmit antenna 356. In addition, the communication subsystem 302 also includes a processing module, such as a digital signal processor (DSP) 358, and local oscillators (LOs) 360. The specific design and implementation of the communication subsystem 302 is dependent upon the communication network in which the mobile communication device 201 is intended to operate. For example, the communication subsystem 302 of the mobile communication device 201 can be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, can also be utilized with the mobile communication device 201.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 201 can send and receive communication signals over the wireless carrier network 370. Signals received from the wireless carrier network 370 by the receive antenna 354 are routed to the receiver 350, which provides for signal amplification, frequency down conversion, filtering, channel selection, etc., and can also provide analog to digital conversion. Analog-to-digital conversion of the received signal allows the DSP 358 to perform more complex communication functions, such as demodulation and decoding. In a similar manner, signals to be transmitted to the wireless carrier network 370 are processed (e.g., modulated and encoded) by the DSP 358 and are then provided to the transmitter 352 for digital to analog conversion, frequency up conversion, filtering, amplification and transmission to the wireless carrier network 370 (or networks) via the transmit antenna 356.

In addition to processing communication signals, the DSP 358 provides for control of the receiver 350 and the transmitter 352. For example, gains applied to communication signals in the receiver 350 and the transmitter 352 can be adaptively controlled through automatic gain control algorithms implemented in the DSP 358.

In a data communication mode, a received signal, such as a text message or web page download, is processed by the communication subsystem 302 and is input to the microprocessor 328. The received signal is then further processed by the microprocessor 328 for output to the display 326, or alternatively to some auxiliary I/O devices 306. A device user can also compose data items, such as e-mail messages, using the keyboard 324 and/or some other auxiliary I/O device 306, such as a touchpad, a rocker switch, a thumb-wheel, a trackball, a touchscreen, or some other type of input device. The composed data items can then be transmitted over the wireless carrier network 370 via the communication subsystem 302.

In a voice communication mode, overall operation of the device is substantially similar to the data communication mode, except that received signals are output to the speaker 311, and signals for transmission are generated by a microphone 312. Alternative voice or audio I/O subsystems, such as a voice message recording subsystem, can also be implemented on the mobile communication device 201. In addition, the display 326 can also be utilized in voice communication mode, for example, to display the identity of a calling party, the duration of a voice call, or other voice call related information.

The short-range communications subsystem 304 enables communication between the mobile communication device 201 and other proximate systems or devices, which need not necessarily be similar devices. For example, the short-range communications subsystem can include an infrared device and associated circuits and components, or a Bluetooth™ communication module to provide for communication with similarly-enabled systems and devices.

In overview, the server 230 can be configured to perform a pre-emptive time-based search for resources for a meeting, thereby facilitating reserving of the resources.

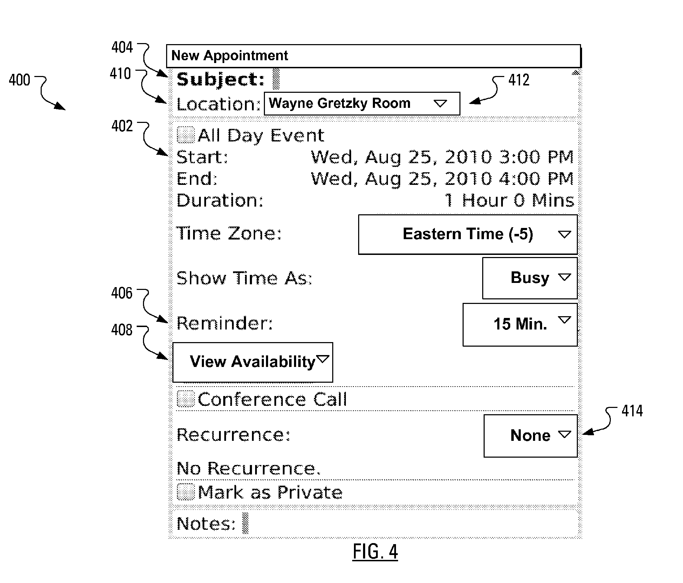

In operation, a meeting organizer (or delegate of the meeting organizer) can manipulate a user interface on a communication device (such as the mobile communication device 201) to select a date and a time in an executing calendar application. Upon selecting a date and a time, the meeting organizer can manipulate the user interface to open a calendar event create screen 400 (see FIG. 4) for the new appointment. The new appointment has, by default, a Start field 402 pre-loaded with the selected date and time. The meeting organizer can input text in a Subject field 404 to establish a subject for the new appointment. The meeting organizer can also select a desired meeting attendee.

The meeting organizer can, through a conventional manipulation of the user interface, select a desired attendee for the new appointment. Such manipulation can involve selecting a menu button, navigating the menu to select an "Invite Attendee" menu item and selecting the desired attendee from among contact information stored in a contact database and accessed using an address book application. Responsive to such desired attendee selection, an indication of the desired attendee can appear in the calendar event create screen 400 in an "Invited" field (not shown), for example, inserted between a Reminder field 406 and a "View Availability" button 408.

The meeting organizer can actuate the "View Availability" button 408 and, thereby, cause a representation of a schedule for the desired attendee to be presented on the display 326 along with a representation of a schedule for the meeting organizer. Conventionally, the representation of a schedule for the desired meeting attendee can be centered around the selected date and time and can indicate times when the desired attendee is available and when the desired attendee is unavailable. This representation is often called "availability" or "free/busy status" information.

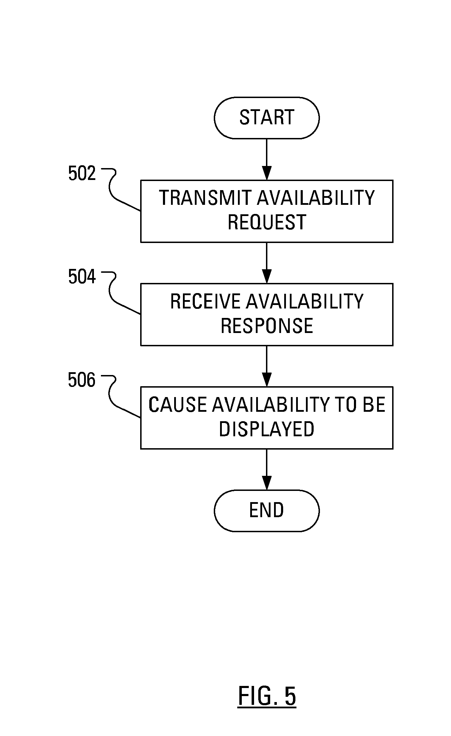

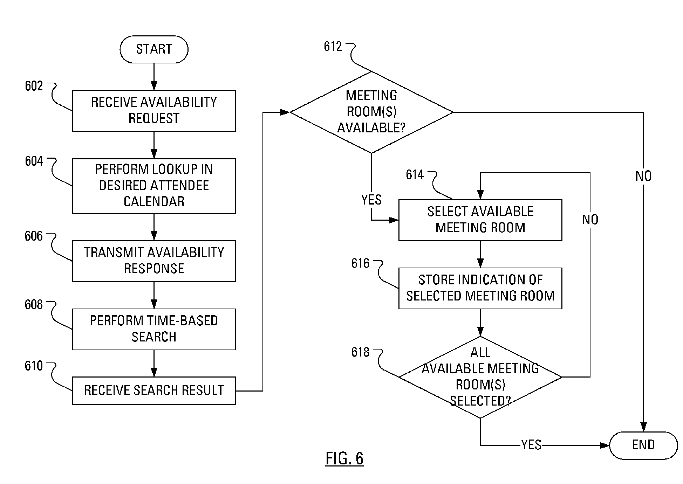

Notably, before the causing of the representation of the schedule for a given desired meeting attendee can be presented on the display 326, the mobile communication device 201 transmits (step 502, FIG. 5), to the server 230, an availability request for the desired attendee. The availability request can include a selected date and time, which can include both a start time and a stop time or a start time and a duration. Responsive to receiving (step 602, FIG. 6) the availability request, the server 230 performs (step 604) a query or lookup in a calendar database associated with the desired attendee. The server 230 then transmits (step 606), to the mobile communication device 201, an availability response, where the availability response includes availability information for the desired attendee. The availability information included in the availability response can include availability information for the selected date, time and duration for the new appointment in addition to availability information for times before and after the selected date and time.

The mobile communication device 201 receives (step 504, FIG. 5), from the server 230, the availability response for the desired attendee. Based on the availability information in the availability response, the microprocessor 328 can cause (step 506) a representation of availability of the desired attendee to be presented on the display 326.

The meeting organizer can invite further desired attendees. For each desired attendee, subsequently, and through use of the "View Availability" button 408, the meeting organizer can cause a consolidated representation of the schedules for all desired attendees to be presented on the display 326. From the consolidated representation, the meeting organizer can determine that the selected date and time is characterized by many of the desired attendees being unavailable. The meeting organizer can then manipulate the Start field 402 to select a new meeting time that maximizes availability of the desired attendees.

Triggered by receiving (step 602, FIG. 6) the availability request, and asynchronous with transmitting (step 606) the availability response, the server 230 can use the selected date and time for the new appointment in conjunction with availability information that has been previous recorded for each of the meeting rooms 102, 104, 106, 108 to search for available resources, such as meeting rooms.

The availability information for each of the meeting rooms 102, 104, 106, 108 can be maintained in an "organization resource cache". The organization resource cache can be optimized for time-based searches. The organization resource cache can be populated in a similar manner as described in United States Patent Application Publication No. 2007/0089071, which publication is hereby incorporated herein by reference.

The organization resource cache can be maintained in a cluster of servers 240 (see FIG. 2), a plurality of geographically distributed servers, or a single server. As resources (e.g., meeting rooms) are allocated, this organization resource cache can maintain resource bookings with the server 230 and, at the same time, the organization resource cache can maintain an in-memory cache to support high rates of requests from multiple mobile communication devices. The in-memory cache can also serve to maintain delay times low between request and response.

Responsive to performing a time-based search (step 608), for example by transmitting a search request to the cluster of servers 240 maintaining the organization resource cache, the mobile communication device 201 can receive (step 610) a search result from the organization resource cache. The server 230 can determine (step 612), from the search result, that one, or more, of the meeting rooms 102, 104, 106, 108 is available on the selected date at the selected time for the new appointment.

Subsequent to such determining, the server processor 232 at the server 230 can select (step 614) a meeting room that is available according to the search result and store (step 616) an indication of the selected meeting room in the memory 234. This available resource information can be said to have been stored in a "resource request cache".

The available resource information recorded in the resource request cache can be associated with an expiry date and time. Such an expiry date and time allows for the available resource information to cleared out of the resource request cache in the event that the meeting organizer aborts the creation of the new appointment; that is, in the event wherein the meeting organizer elects not to save the new appointment. As a convenient consequence of the use of the expiry date, capacity in the memory of the server 230 is not unduly utilized.

The server processor 232 can then determine (step 618) whether all meeting rooms in the search result have been selected. If all meeting rooms in the search result have not been selected, the server processor 232 can select (step 614) another meeting room that is available according to the search result and store (step 616) an indication of the selected meeting room in the memory 234.

The method of FIG. 6 can be considered complete when the server processor 232 determines (step 618) that all meeting rooms in the search result have been selected. Alternatively, the method of FIG. 6 can be considered complete when the server processor 232 determines (step 618) that no meeting rooms are indicated in the search result.

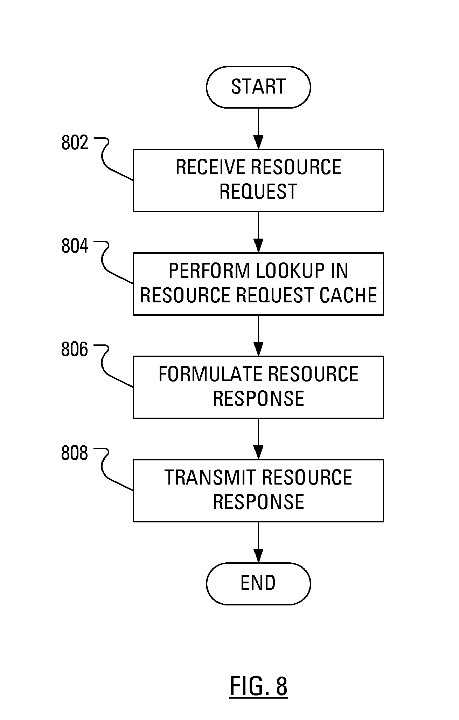

Responsive to detecting (step 702) that the meeting organizer has manipulated the user interface to put focus on a location field 410 on the calendar event create screen 400 on the mobile communication device 201, the processor 328 arranges transmission (step 704), to the server 230, of a resource request. The resource request specifies the date and time currently selected on the calendar event create screen 400. Responsive to receiving (step 802, FIG. 8) the resource request, the server processor 232 at the server 230 performs (step 804) a lookup in the resource request cache. Based on the result of the lookup, the server processor 232 formulates (step 806) an available resource response and transmits (step 808) the available resource response to the mobile communication device 201. Conveniently, the server 230 has already performed (step 608, FIG. 6) a time-based search of the organization resource cache and stored (step 616) availability information in the resource request cache. Accordingly, formulating (step 806) the resource response merely requires that the server processor 232 at the server 230 accesses the resource request cache and generates a resource response to include indications of the names of the meeting rooms that are available for the selected date and time.

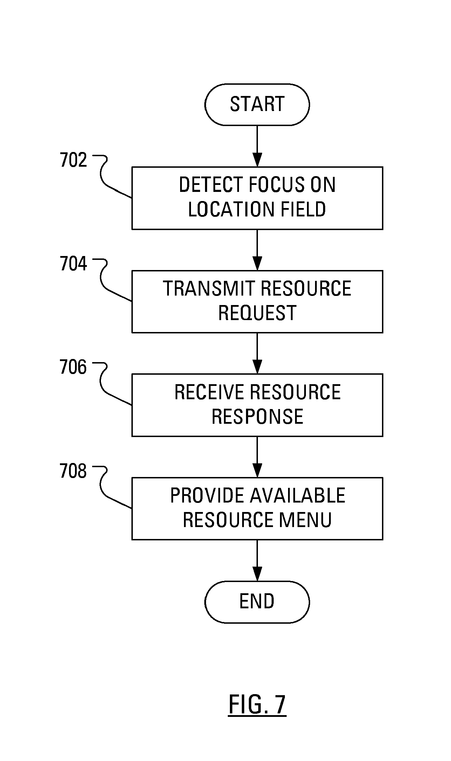

Upon receiving (step 706, FIG. 7) the resource response, the processor 328 controls the user interface to provide (step 708) indications of the names of the resources that are available for the selected date and time. The indications can, for example, be presented in the form of a "drop down menu" 412, as illustrated in FIG. 4.

When transmitting (step 608, FIG. 6) the time-based search, the server processor 232 at the server 230 can specify filtering criteria. For example, the meeting organizer can only be interested in meeting rooms with the capacity to accommodate 20 attendees. Rather than specifying filtering criteria in the search, the server processor 232 can filter the search result so that only availability information for meeting rooms meeting the filtering criteria are stored (step 616) in the resource request cache. Other filtering criteria can be related to audio/visual equipment required for the meeting. For example, the calendar event create screen 400 can allow the meeting organizer to select from various equipment, such as a projector, a screen, a television, a video disc player, a computer, a printer, a telephone, teleconferencing equipment, etc., that can be required for a meeting. Furthermore, the calendar event create screen 400 can allow the meeting organizer to specify catering requirements or a requirement for an on-site information technology specialist to assist with presentation and/or conferencing equipment.

Rather than require the meeting organizer to specify various equipment, such as a projector, a screens, a television, a video disc player, a computer, a telephone, etc., that can be required for a meeting, and filtering available meeting rooms on the basis of availability of such equipment, the present resource reservation facilitation methods and systems can be applied to the reservation of such equipment. That is, rather than, or in addition to, selecting an available meeting room from a drop down menu in the calendar event create screen 400, various available equipment can be selectable in the calendar event create screen 400, with equipment availability cached by the server 230 in a manner similar to the manner in which availability of meeting rooms is cached as described in the foregoing.

Responsive to receiving an indication that the meeting organizer has manipulated the user interface to indicate that the new appointment creation is complete, which manipulation can, for example, involve causing a menu to appear and selecting a "save" menu item, the server processor 232 at the server 230 can transmit a reservation message to the cluster of servers 240 to reserve the meeting room specified in the location field of the calendar event create screen 400. Accordingly, the cluster of servers 240 can update the organization resource cache so that future searches will show the selected meeting room as unavailable for the selected date and time. The server processor 232 can also transmit meeting invitations to each of the desired attendees.

Notably, the calendar event create screen 400 includes a drop down menu 414 for indicating that a calendar event is recurring. Accordingly, rather than specifying only a single date and time, an availability request transmitted by the mobile communication device 201 (step 502, FIG. 5) and received by the server 230 (step 602, FIG. 6) can specify a set of dates and times. Furthermore, the set of dates and times need not have common days of the week or times. For example, while one calendar event could be established for 9:00 AM every Monday morning, another calendar event can have a set of dates and times that include September 14, from 2-5 PM, September 15, from 1-3 PM and September 16, from 9-11 AM.

The above-described implementations of the present application are intended to be examples only. Alterations, modifications and variations can be effected to the particular implementations by those skilled in the art without departing from the scope of the application, which is defined by the claims appended hereto.

## Claims

1. A method of facilitating resource reservation, the method comprising:
receiving (602) an availability request for a desired attendee for a calendar event, said availability request specifying a date and time, said availability request preceding a request to establish the calendar event;
searching (608) an organization resource cache using said date and time, said organization resource cache storing availability information for resources;
receiving (610) a search result from said organization resource cache; and
based on said search result, storing (616), in a memory, an indication of a specific resource that is available on said date at said time.

2. The method as claimed in claim 1 further comprising:
receiving (802), from a mobile communication device, a resource request specifying said date and said time;
reading (804), from said memory, said indication of said specific resource that is available on said date at said time;
formulating (806) a resource response, where said formulating includes said indication; and
transmitting (808) said resource response to said mobile communication device.

3. The method as claimed in claim 1 or claim 2 further comprising:
receiving an indication that new appointment creation is complete; and
transmitting a reservation message to said organization resource cache.

4. The method as claimed in any preceding claim wherein said resource is a meeting room.

5. The method as claimed in any preceding claim wherein said resource is selected from a group comprising a projector, a screen, a television, a video disc player, a computer, a printer, a telephone and teleconferencing equipment.

6. The method as claimed in any one of claims 1 to 5 wherein said availability request specifies filtering criteria.

7. The method as claimed in claim 6 wherein said searching includes indicating said filtering criteria.

8. The method as claimed in any of claims 2 to 7 wherein said resource request specifies filtering criteria.

9. The method as claimed in claim 8 wherein said filtering criteria comprises a desired capacity.

10. The method as claimed in claim 8 or claim 9 further comprising determining that said specific resource satisfies said filtering criteria.

11. A server comprising:
a memory (234); and
a processor (232) adapted to carry out the method of any one of claims 1-10.

12. A computer-readable medium (234) containing computer-executable instructions that, when performed by a processor (232), cause said processor (232) to carry out the method of any one of claims 1-10.

13. A method of establishing a new appointment in a calendar, said method comprising:
transmitting (502) an availability request for a desired attendee and a selected date and time;
receiving (504) an availability response providing availability information for said desired attendee;
transmitting (704) a resource request, said resource request specifying said selected date and time;
receiving (706) a resource response, said resource response including an indication of at least one resource available for said selected date and time;
presenting (708) an indication of said at least one resource available for said selected date and time; and
receiving a selection of said at least one resource available for said selected date and time.

14. A mobile communication device comprising a processor (328) adapted to carry out the method of claim 13.

15. A computer-readable medium (316, 318) containing computer-executable instructions that, when performed by a processor (328) in a mobile communication device, cause said processor to carry out the method of claim 13.

## Amended claims

### Amended claims in accordance with Rule 137(2) EPC.

**1.** A method of facilitating resource reservation, the method comprising:
receiving (602) an availability request for a desired attendee for a calendar event, said availability request specifying a date and time, said availability request preceding a request to establish the calendar event;
triggered by said receiving, searching (608) an organization resource cache using said date and time, said organization resource cache storing availability information for resources;
receiving (610) a search result from said organization resource cache; and
based on said search result, storing (616), in a memory, an indication of a specific resource that is available on said date at said time.

**2.** The method as claimed in claim 1 further comprising:
receiving (802), from a mobile communication device, a resource request specifying said date and said time;
reading (804), from said memory, said indication of said specific resource that is available on said date at said time;
formulating (806) a resource response, where said formulating includes said indication; and
transmitting (808) said resource response to said mobile communication device.

**3.** The method as claimed in claim 1 or claim 2 further comprising:
receiving an indication that new appointment creation is complete; and
transmitting a reservation message to said organization resource cache.

**4.** The method as claimed in any preceding claim wherein said resource is a meeting room.

**5.** The method as claimed in any preceding claim wherein said resource is selected from a group comprising a projector, a screen, a television, a video disc player, a computer, a printer, a telephone and teleconferencing equipment.

**6.** The method as claimed in any one of claims 1 to 5 wherein said availability request specifies filtering criteria.

**7.** The method as claimed in claim 6 wherein said searching includes indicating said filtering criteria.

**8.** The method as claimed in any of claims 2 to 7 wherein said resource request specifies filtering criteria.

**9.** The method as claimed in claim 8 wherein said filtering criteria comprises a desired capacity.

**10.** The method as claimed in claim 8 or claim 9 further comprising determining that said specific resource satisfies said filtering criteria.

**11.** A server comprising:
a memory (234); and
a processor (232) adapted to carry out the method of any one of claims 1-10.

**12.** A computer-readable medium (234) containing computer-executable instructions that, when performed by a processor (232), cause said processor (232) to carry out the method of any one of claims 1-10.

**13.** A method of establishing a new appointment in a calendar, said method comprising:
transmitting (502) an availability request for a desired attendee and a selected date and time, receipt of said availability request at a server triggering the server to search an organization resource cache using said selected date and
time, said organization resource cache storing availability information for resources;
receiving (504) an availability response providing availability information for said desired attendee;
transmitting (704) a resource request, said resource request specifying said selected date and time;
receiving (706) a resource response, said resource response including an indication of at least one resource available for said selected date and time,
said indication having been retrieved from a memory of the server where it was stored based on a result of said search;
presenting (708) an indication of said at least one resource available for said selected date and time; and
receiving a selection of said at least one resource available for said selected date and time.

**14.** A mobile communication device comprising a processor (328) adapted to carry out the method of claim 13.

**15.** A computer-readable medium (316, 318) containing computer-executable instructions that, when performed by a processor (328) in a mobile communication device, cause said processor to carry out the method of claim 13.
